# EUROPEAN PATENT APPLICATION

(11) **EP 4 579 705 A1**
(43) Date of publication of application: **02.07.2025**
(21) Application number: 24218112.1
(22) Date of filing: 06.12.2024
(51) Int. Cl.: H01G 4/12, H01G 4/224, H01G 4/232, H01G 4/30, H01G 4/012

(54) **MULTILAYER ELECTRONIC COMPONENT**

(30) Priority: 29.12.2023 KR 20230196825
(71) Applicant: Samsung Electro-Mechanics Co., Ltd., Gyeonggi-do (KR)
(72) Inventor: Choe, Yeong Ju, Suwon-si, Gyeonggi-do (KR); Lee, Da Jeong, Suwon-si, Gyeonggi-do (KR); Heo, Ji Woo, Suwon-si, Gyeonggi-do (KR)
(74) Representative: Grünecker Patent- und Rechtsanwälte PartG mbB

(57) **Abstract**

A multilayer electronic component includes a body including a capacitance formation portion including a dielectric layer and an internal electrode alternately stacked with the dielectric layer, and a cover portion disposed on both end surfaces of the capacitance formation portion in a stacking direction of the dielectric layer and the internal electrode, and an external electrode disposed on the body. When an area introduced inwardly from a surface of the body and including glass is defined as a lead-in portion, the lead-in portion is disposed between the capacitance formation portion and the cover portion.

## Description

### CROSS-REFERENCE TO RELATED APPLICATION(S)

This application claims benefit of priority to Korean Patent Application No. 10-2023-0196825 filed on December 29, 2023 in the Korean Intellectual Property Office, the disclosure of which is incorporated herein by reference in its entirety.

### TECHNICAL FIELD

The present disclosure relates to a multilayer electronic component.

Multilayer Ceramic Capacitors (MLCCs), as multilayer electronic components, are chip-type condensers mounted on printed circuit boards of various electronic products, such as imaging devices, for example, liquid crystal displays (LCDs) and plasma display panels (PDPs), computers, smartphones, mobile phones and the like, and serving as charging or discharging electricity.

Such multilayer ceramic capacitors may be used as components in various electronic devices due to a small size, high capacitance, and ease of mounting. As various electronic devices such as computers and mobile devices are miniaturized and have higher output, the demand for miniaturization and higher capacitance for multilayer ceramic capacitors is increasing.

Meanwhile, to protect the internal electrodes forming capacitance, cover portions are disposed on the upper and lower parts of the capacitance formation portion to protect the internal electrodes. However, since external moisture may easily penetrate into the interface between a capacitance formation portion and a cover portion, this is a part where moisture resistance reliability is weak, and various attempts are being made to resolve this.

### SUMMARY

An aspect of the present disclosure is to improve interfacial bonding strength between a capacitance formation portion and a cover portion.

An aspect of the present disclosure is to provide a multilayer electronic component having improved moisture resistance reliability.

According to an aspect of the present disclosure, a multilayer electronic component includes a body including a capacitance formation portion including a dielectric layer and an internal electrode alternately stacked with the dielectric layer, and a cover portion disposed on both end surfaces of the capacitance formation portion in a stacking direction of the dielectric layer and the internal electrode; and an external electrode disposed on the body. When an area introduced inwardly from a surface of the body and including glass is defined as a lead-in portion, the lead-in portion is disposed between the capacitance formation portion and the cover portion.

According to an aspect of the present disclosure, a multilayer electronic component includes a body including a capacitance formation portion including a dielectric layer and an internal electrode alternately stacked with the dielectric layer, and a cover portion disposed on both end surfaces of the capacitance formation portion in a stacking direction of the dielectric layer and the internal electrode; and an external electrode disposed on the body. A lead-in portion includes glass and extends from an end of the internal electrode along the internal electrode to an interior of the body.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a schematic perspective view of a multilayer electronic component according to an embodiment;
FIG. 2 is a schematic perspective view illustrating a stacked structure of internal electrodes;
FIG. 3 is a schematic cross-sectional view taken along line I-I' of FIG. 1;
FIG. 4 is a schematic enlarged view of area P1 of FIG. 3;
FIG. 5 is a schematic cross-sectional view taken along line I-I' of a multilayer electronic component according to another embodiment; and
FIG. 6 is a schematic enlarged view of area P2 of FIG. 5.

### DETAILED DESCRIPTION

Hereinafter, embodiments of the present disclosure will be described with reference to detailed embodiments and accompanying drawings. However, the embodiments of the present disclosure may be modified in many different forms, and the scope of the present disclosure is not limited to the embodiments described below. In addition, the embodiments of the present disclosure are provided to more completely describe the present disclosure to those skilled in the art. Therefore, the shapes and sizes of elements in the drawings may be exaggerated for clearer explanation, and elements indicated by the same reference numerals in the drawings are the same elements.

In addition, to clearly describe the present disclosure in the drawings, parts irrelevant to the description are omitted, and the size and thickness of each component illustrated in the drawings are arbitrarily illustrated for convenience of description, and thus, the present disclosure is not necessarily limited to the illustrated. Also, components having the same function within the scope of the same concept are described using the same reference numerals. Furthermore, throughout the specification, when a certain component is said to "include," it means that it may further include other components without excluding other components unless otherwise stated.

In the drawing, the first direction may be defined as the stacking direction or the thickness (T) direction, the second direction may be defined as the length (L) direction, and the third direction may be defined as the width (W) direction.

### Multilayer Electronic Component

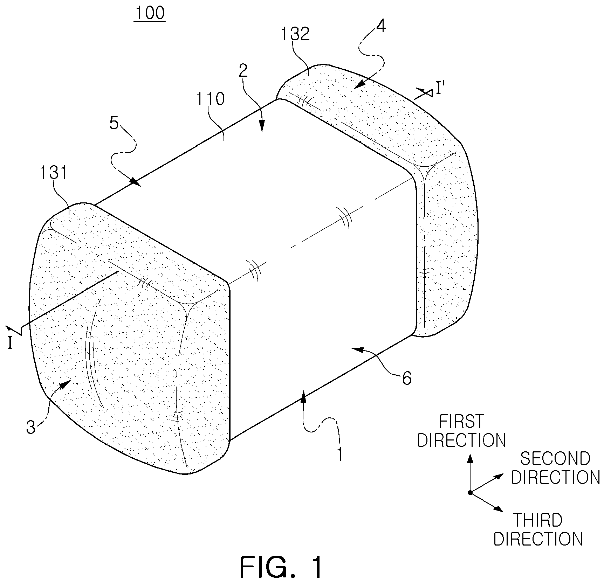

FIG. 1 schematically illustrates a perspective view of a multilayer electronic component according to an embodiment.

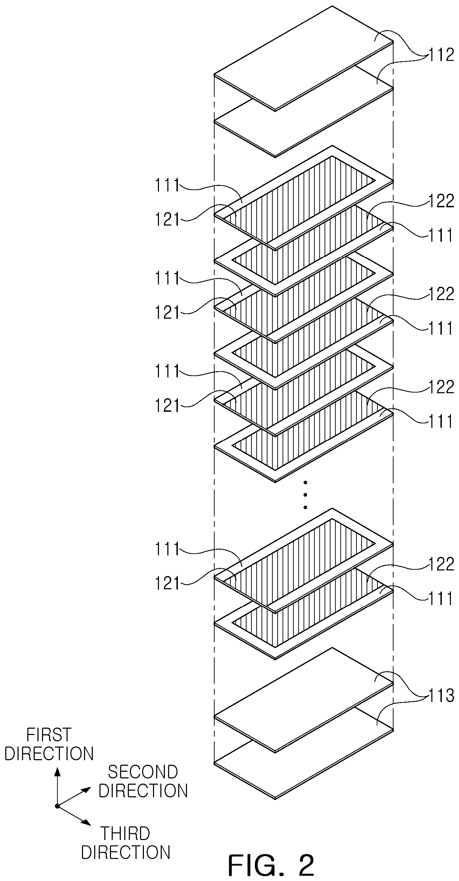

FIG. 2 is a schematic illustration of an exploded perspective view illustrating a stacked structure of an internal electrode.

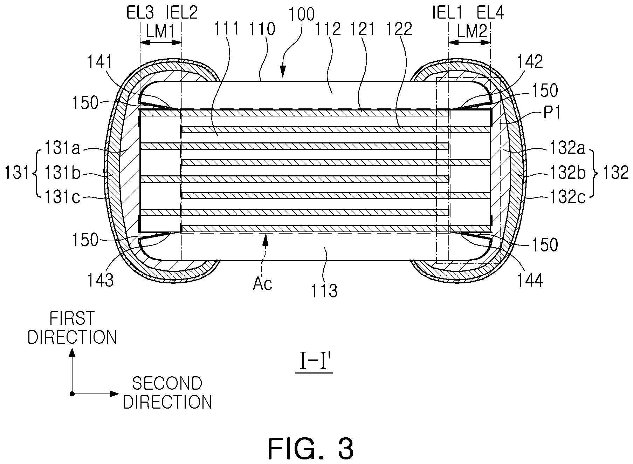

FIG. 3 is a schematic illustration of a cross-sectional view taken along line I-I' of FIG. 1.

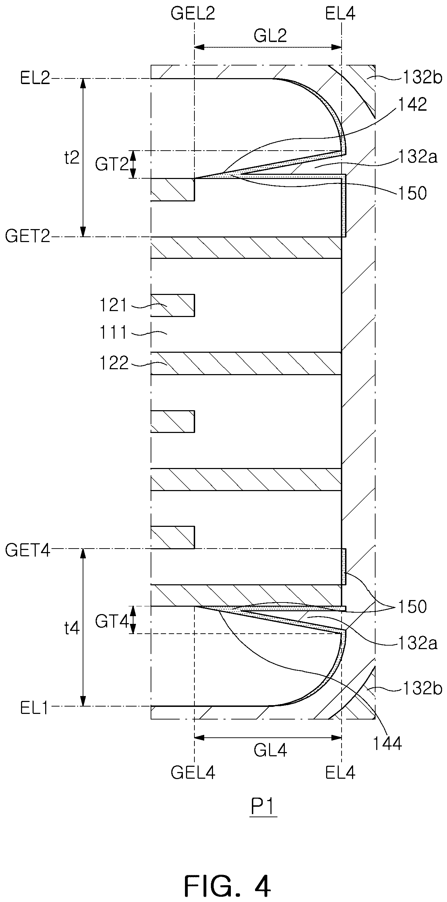

FIG. 4 is a schematic illustration of an enlarged view of a P1 region of FIG. 3.

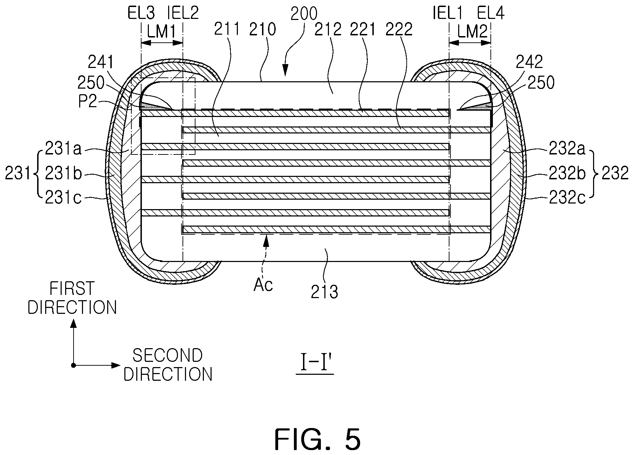

FIG. 5 is a schematic illustration of a cross-sectional view taken along line I-I' of a multilayer electronic component according to another embodiment.

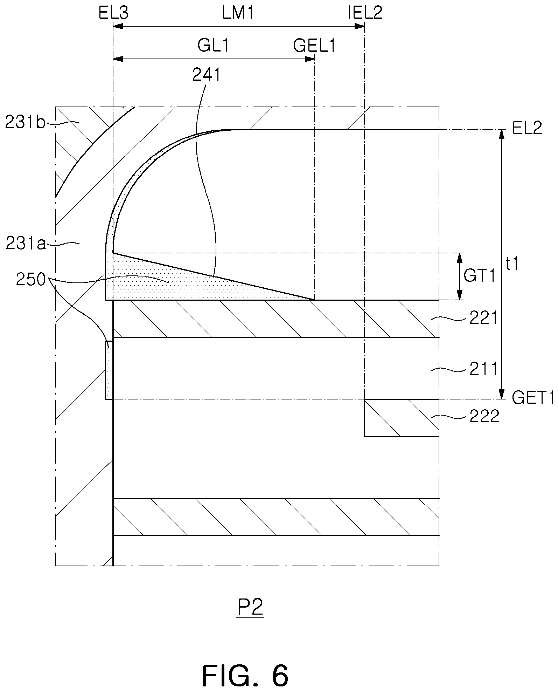

FIG. 6 is a schematic illustration of an enlarged view of a P2 region of FIG. 5.

Hereinafter, with reference to FIGS. 1 to 6, a multilayer electronic component 100 according to an embodiment will be described in detail. However, a multilayer ceramic capacitor will be described as an example of a multilayer electronic component, but the present disclosure may also be applied to various electronic products that utilize a dielectric composition, such as an inductor, a piezoelectric element, a varistor, or a thermistor. In addition, unless there is a contradictory description, the description of the multilayer electronic component 100 according to an embodiment may be equally applied to a multilayer electronic component 200 according to another embodiment.

According to an embodiment, a multilayer electronic component 100 includes a body 110 including a capacitance formation portion Ac including a dielectric layer 111 and internal electrodes 121 and 122 alternately stacked with the dielectric layer 111, and cover portions 112 and 113 disposed on both end surfaces of the capacitance formation portion Ac in the stacking direction; and external electrodes 131 and 132 disposed on the body 110. When an area that is introduced inwardly from the surface of the body 110 and includes glass 150 is referred to as lead-in portions 141, 142, 143 and 144, the lead-in portions 141, 142, 143 and 144 may be disposed between the capacitance formation portion Ac and the cover portions 112 and 113.

The body 110 may have a dielectric layer 111 and internal electrodes 121 and 122 alternately stacked.

In more detail, the body 110 may include a capacitance formation portion Ac that forms capacitance by including a first internal electrode 121 and a second internal electrode 122 that are disposed alternately to face each other with a dielectric layer 111 interposed therebetween.

Although the detailed shape of the body 110 is not particularly limited, as illustrated, the body 110 may have a hexahedral shape or a shape similar thereto. Due to shrinkage of the ceramic particles included in the body 110 during firing, the body 110 may have a substantially hexahedral shape, although it does not have a perfectly straight hexahedral shape.

The body 110 may have first and second surfaces 1 and 2 opposing each other in a first direction, third and fourth surfaces 3 and 4 connected to the first and second surfaces 1 and 2 and opposing each other in a second direction, and fifth and sixth surfaces 5 and 6 connected to the first to fourth surfaces 1, 2, 3 and 4 and opposing each other in the third direction.

The plurality of dielectric layers 111 forming the body 110 are in a fired state, and the boundary between adjacent dielectric layers 111 will be unified to the extent that it is difficult to confirm without using a scanning electron microscope (SEM).

The raw material forming the dielectric layer 111 is not limited as long as sufficient capacitance may be obtained. In general, a perovskite (ABO₃)-based material may be used, and for example, a barium titanate-based material, a lead composite perovskite-based material, a strontium titanate-based material or the like may be used. The barium titanate-based material may include BaTiO₃-based ceramic particles. As an example of the ceramic particles, BaTiO₃, or (Ba₁₋ₓCaₓ)TiO₃ (0<x<1, Ba(Ti_{1-y}Ca_{y})O₃ (0<y<1, (Ba₁₋ₓCaₓ) (Ti_{1-y}Zr_{y})O₃ (0<x<1, 0<y<1 or Ba(Ti_{1-y}Zr_{y})O₃ (0<y<1 in which calcium (Ca), zirconium (Zr) or the like is partially solid-solubilized in BaTiO₃, may be provided.

In addition, various ceramic additives, organic solvents, binders, dispersants, and the like may be added to powder such as barium titanate (BaTiO₃), as a raw material forming the dielectric layer 111 according to the usage of the present disclosure.

The thickness of the dielectric layer 111 does not need to be specifically limited.

To secure reliability of the multilayer electronic component 100 under a high voltage environment, the thickness of the dielectric layer 111 may be 10.0 um or less. In addition, to obtain miniaturization and high capacitance of the multilayer electronic component 100, the thickness of the dielectric layer 111 may be 3.0 um or less, and to more easily obtain ultra-miniaturization and high capacitance, the thickness of the dielectric layer 111 may be 1.0 um or less, in detail, 0.6 um or less, and in more detail, 0.4 um or less.

In this case, the thickness of the dielectric layer 111 may refer to the thickness of the dielectric layer 111 disposed between the first and second internal electrodes 121 and 122.

Meanwhile, the thickness of the dielectric layer 111 may refer to the size of the dielectric layer 111 in the first direction. In addition, the thickness of the dielectric layer 111 may refer to the average thickness of the dielectric layer 111 and may refer to the average size of the dielectric layer 111 in the first direction.

The average size of the dielectric layer 111 in the first direction may be measured by scanning the image of the cross-section of the body 110 in the first and second directions with a scanning electron microscope (SEM) at 10,000 magnification. In more detail, the average size of one dielectric layer 111 in the first direction may refer to an average value calculated by measuring the size of one dielectric layer 111 in the first direction at 10 equally spaced points in the second direction in the scanned image. The 10 equally spaced points may be designated in the capacitance formation portion Ac. Additionally, if this average value measurement is expanded to 10 dielectric layers 111 and the average value is measured, the average size of the dielectric layers 111 in the first direction may be further generalized.

The internal electrodes 121 and 122 may be alternately stacked with the dielectric layer 111.

The internal electrodes 121 and 122 may include a first internal electrode 121 and a second internal electrode 122, and the first and second internal electrodes 121 and 122 are alternately disposed to face each other with the dielectric layer 111 forming the body 110, interposed therebetween, and may be exposed to the third and fourth surfaces 3 and 4 of the body 110, respectively.

In more detail, the first internal electrode 121 may be spaced apart from the fourth surface 4 and exposed through the third surface 3, and the second internal electrode 122 may be spaced apart from the third surface 3 and exposed through the fourth surface 4. A first external electrode 131 is disposed on the third surface 3 of the body 110 and connected to the first internal electrode 121, and a second external electrode 132 is disposed on the fourth surface 4 of the body 110 and connected to the second internal electrode 122.

For example, the first internal electrode 121 is connected to the first external electrode 131 without being connected to the second external electrode 132, and the second internal electrode 122 is connected to the second external electrode 132 without being connected to the first external electrode 131. At this time, the first and second internal electrodes 121 and 122 may be electrically separated from each other by a dielectric layer 111 disposed therebetween.

Meanwhile, the body 110 may be formed by alternately stacking a first ceramic green sheet on which a first internal electrode 121 is printed and a second ceramic green sheet on which a second internal electrode 122 is printed, and then firing the same.

Materials forming the internal electrodes 121 and 122 are not particularly limited, and materials with excellent electrical conductivity may be used. For example, the internal electrodes 121 and 122 may include at least one of nickel (Ni), copper (Cu), palladium (Pd), silver (Ag), gold (Au), platinum (Pt), tin (Sn), tungsten (W), titanium (Ti) and alloys thereof.

Additionally, the internal electrodes 121 and 122 may be formed by printing a conductive paste for internal electrodes, containing at least one of nickel (Ni), copper (Cu), palladium (Pd), silver (Ag), gold (Au), platinum (Pt), tin (Sn), tungsten (W), titanium (Ti) and alloys thereof, on a ceramic green sheet. The printing method for the conductive paste for internal electrodes may be screen printing or gravure printing, and the present disclosure is not limited thereto.

Meanwhile, the thickness of the internal electrodes 121 and 122 does not need to be particularly limited.

To secure reliability under a high-voltage environment of the multilayer electronic component 100, the thickness of the internal electrodes 121 and 122 may be 3.0 um or less. In addition, to obtain miniaturization and high capacitance of the multilayer electronic component 100, the thickness of the internal electrodes 121 and 122 may be 1.0 um or less, and to more easily obtain ultra-miniaturization and high capacitance, the thickness of the internal electrodes 121 and 122 may be 0.6 um or less, and in more detail, 0.4 um or less.

In this case, the thickness of the internal electrodes 121 and 122 may refer to the size of the internal electrodes 121 and 122 in the first direction. In addition, the thickness of the internal electrodes 121 and 122 may refer to the average thickness of the internal electrodes 121 and 122 and may refer to the first direction average size of the internal electrodes 121 and 122.

The first direction average size of the internal electrodes 121 and 122 may be measured by scanning the image of the first and second direction cross-sections of the body 110 with a scanning electron microscope (SEM) at 10,000x magnification. In more detail, the first direction average size of one internal electrode may be an average value calculated by measuring the first direction size of one internal electrode at 10 equally spaced points in the second direction in the scanned image. The 10 equally spaced points may be designated in the capacitance formation portion Ac. In addition, if this average value measurement is extended to 10 internal electrodes and the average value is measured, the first direction average size of the internal electrode may be more generalized.

Meanwhile, in an embodiment, when the average thickness of at least one of the plurality of dielectric layers 111 is td and the average thickness of at least one of the plurality of internal electrodes 121 and 122 is te, td and te may satisfy 2×te < td.

In detail, the average thickness of one dielectric layer 111 may be greater than twice the average thickness of one of the internal electrodes 121 and 122. In detail, the average thickness of the plurality of dielectric layers 111 may be greater than twice the average thickness of the plurality of internal electrodes 121 and 122.

Generally, reliability issues due to a decrease in the breakdown voltage (BDV) under a high-voltage environment are a major issue for high-voltage electrical electronic components.

Therefore, to prevent a decrease in the breakdown voltage under a high-voltage environment, the average thickness of the dielectric layer 111 may be made greater than twice the average thickness of the internal electrodes 121 and 122, thereby increasing the thickness of the dielectric layer, which is the distance between the internal electrodes, and improving the breakdown voltage characteristics.

If the average thickness of the dielectric layer 111 is twice or less than twice the average thickness of the internal electrodes 121 and 122, the breakdown voltage may be decreased because the average thickness of the dielectric layer, which is the distance between the internal electrodes, is thin, and a short circuit may occur between the internal electrodes.

Meanwhile, the body 110 may include cover portions 112 and 113 disposed on both end surfaces of the capacitance formation portion Ac in the first direction.

In detail, the body 110 may include a first cover portion 112 disposed on one surface of the capacitance formation portion Ac in the first direction and a second cover portion 113 disposed on the other surface of the capacitance formation portion Ac in the first direction, and in more detail, may include an upper cover portion 112 disposed on the upper portion of the capacitance formation portion Ac in the first direction and a lower cover portion 113 disposed on the lower portion of the capacitance formation portion Ac in the first direction.

The upper cover portion 112 and the lower cover portion 113 may be formed by stacking a single dielectric layer 111 or two or more dielectric layers 111 on the upper and lower surfaces of the capacitance formation portion Ac in the first direction, respectively, and may basically play a role in preventing damage to the internal electrodes 121 and 122 due to physical or chemical stress.

The upper cover portion 112 and the lower cover portion 113 do not include internal electrodes 121 and 122 and may include the same material as the dielectric layer 111. For example, the upper cover portion 112 and the lower cover portion 113 may include a ceramic material, for example, a barium titanate (BaTiO₃)-based ceramic material.

Meanwhile, the thickness of the cover portions 112 and 113 does not need to be particularly limited.

However, to more easily obtain miniaturization and high capacitance of the multilayer electronic component, the thickness of the cover portions 112 and 113 may be 100 um or less, in detail, 30 um or less, and in more detail, 20 um or less in ultra-small products.

In this case, the thickness of the cover portions 112 and 113 may refer to the size of the cover portions 112 and 113 in the first direction. In addition, the thickness of the cover portions 112 and 113 may refer to the average thickness of the cover portions 112 and 113 and may refer to the average size of the cover portions 112 and 113 in the first direction.

The average size of the cover portions 112 and 113 in the first direction may be measured by scanning an image of the cross-section of the body 110 in the first and second directions with a scanning electron microscope (SEM) at 10,000x magnification, and in more detail, may refer to an average value calculated by measuring the first direction size at 10 points equally spaced in the second direction in an image obtained by scanning one cover portion.

In addition, the first direction average size of the cover portion measured by the above-described method may have a size substantially the same as the first direction average size of the cover portion in the first and third direction cross-section of the body 110.

Meanwhile, the multilayer electronic component 100 may include a side margin portion disposed on both end surfaces of the body 110 in the third direction.

In more detail, the side margin portion may include a first side margin portion disposed on the fifth surface 5 of the body 110 and a second side margin portion disposed on the sixth surface 6 of the body 110.

As illustrated, the side margin portion may refer to an area between the third-direction end-surfaces of the first and second internal electrodes 121 and 122 and the boundary surface of the body 110, based on the first and third-direction cross-section of the body 110.

The side margin portion may be formed by applying a conductive paste to the ceramic green sheet applied to the capacitance formation portion Ac, except for the portion where the side margin portion is to be formed, thereby forming internal electrodes 121 and 122, and by performing cutting so that the internal electrodes 121 and 122 after stacking are exposed to the fifth and sixth surfaces 5 and 6 of the body 110 to suppress the step caused by the internal electrodes 121 and 122, and then stacking a single dielectric layer 111 or two or more dielectric layers 111 in the third direction on both end-surfaces of the capacitance formation portion Ac in the third direction.

The side margin portion may basically play a role in preventing damage to the internal electrodes 121 and 122 due to physical or chemical stress.

The first side margin portion and the second side margin portion do not include the internal electrodes 121 and 122 and may include the same material as the dielectric layer 111. For example, the first side margin portion and the second side margin portion may include a ceramic material, for example, a barium titanate (BaTiO₃)-based ceramic material.

Meanwhile, the width of the first and second side margin portions need not be particularly limited.

However, to more easily obtain miniaturization and high capacitance of the multilayer electronic component 100, the width of the side margin portion may be 100 um or less, in detail, 30 um or less, and in more detail, 20 um or less in ultra-small products.

In this case, the width of the side margin portion may refer to the size of the side margin portion in the third direction. In addition, the width of the side margin portion may refer to the average width of the side margin portion, and may refer to the average size of the side margin portion in the third direction.

The average size of the side margin portion in the third direction may be measured by scanning the image of the cross-section of the first and third directions of the body 110 with a scanning electron microscope (SEM) at 10,000x magnification, and in more detail, may refer to the average value calculated by measuring the third direction size at 10 points at equal intervals in the first direction in the image of one side margin portion scanned.

In an embodiment, a structure in which a multilayer electronic component 100 has two external electrodes 131 and 132 is described, but the number or shape of the external electrodes 131 and 132 may be changed depending on the shape of the internal electrodes 121 and 122 or other uses.

The external electrodes 131 and 132 may be disposed on the body 110 and connected to the internal electrodes 121 and 122.

In more detail, the external electrodes 131 and 132 may be disposed on the third and fourth surfaces 3 and 4 of the body 110, respectively, and may include first and second external electrodes 131 and 132 that are connected to the first and second internal electrodes 121 and 122, respectively. For example, the first external electrode 131 may be disposed on the third surface 3 of the body and connected to the first internal electrode 121, and the second external electrode 132 may be disposed on the fourth surface 4 of the body and connected to the second internal electrode 122.

In addition, the external electrodes 131 and 132 may be disposed to extend to portions of the first and second surfaces 1 and 2 of the body 110, or may be disposed to extend to portions of the fifth and sixth surfaces 5 and 6 of the body 110. For example, the first external electrode 131 may be disposed on portions of the first, second, fifth, and sixth surfaces 1, 2, 5 and 6 of the body 110 and on the third surface 3 of the body 110, and the second external electrode 132 may be disposed on portions of the first, second, fifth, and sixth surfaces 1, 2, 5 and 6 of the body 110 and on the fourth surface 4 of the body 110.

In addition, portions of the external electrodes 131 and 132 may be disposed within the lead-in portions 141, 142, 143 and 144.

In more detail, the external electrodes 131 and 132 may correspond to a structure that glass 150 fills at least portions of the lead-in portions 141, 142, 143 and 144. However, the present disclosure is not particularly limited thereto, and as described later, in a structure in which glass 250 fills the lead-in portions 241 and 242, the external electrodes 231 and 232 may have a structure in which they are disposed on the glass 250 rather than being disposed inside the lead-in portions 241 and 242.

Meanwhile, the external electrodes 131 and 132 may be formed using any material that has electrical conductivity, such as metal, and a specific material thereof may be determined by considering electrical characteristics, structural stability, or the like, and may also have a multilayer structure.

For example, the external electrodes 131 and 132 may include an electrode layer disposed on the body 110 and a plating layer disposed on the electrode layer.

For a more detailed example of the electrode layer, the electrode layers may include first electrode layers 131a and 132a that are sintered electrodes including a first conductive metal and glass, or second electrode layers 131b and 132b that are resin-based electrodes including a second conductive metal and resin.

In this case, the conductive metal included in the first electrode layers 131a and 132a may be referred to as a first conductive metal, and the conductive metal included in the second electrode layers 131b and 132b may be referred to as a second conductive metal. In this case, the first conductive metal and the second conductive metal may be the same or different from each other, and in the case of including multiple conductive metals, may only partially include the same conductive metal, but the present disclosure is not particularly limited.

In addition, the electrode layers 131a, 132a, 131b and 132b may be in the form of a sintered electrode and a resin-based electrode sequentially formed on the body 110.

In addition, the electrode layers 131a, 132a, 131b and 132b may be formed by transferring a sheet including a conductive metal onto the body, or may be formed by transferring a sheet including a conductive metal onto the sintered electrode.

A material having excellent electrical conductivity may be used as the conductive metal included in the electrode layers 131a, 132a, 131b and 132b, and for example, the conductive metal may include at least one selected from the group consisting of nickel (Ni), copper (Cu), palladium (Pd), silver (Ag), gold (Au), platinum (Pt), tin (Sn), tungsten (W), titanium (Ti), and alloys thereof, but is not particularly limited thereto.

In an embodiment, the electrode layers 131a, 132a, 131b and 132b may have a two-layer structure including first electrode layers 131a and 132a and second electrode layers 131b and 132b, and accordingly, the external electrodes 131 and 132 may include first electrode layers 131a and 132a including a first conductive metal and glass, and second electrode layers 131b and 132b disposed on the first electrode layers 131a and 132a and including a second conductive metal and resin.

The first electrode layers 131a and 132a may play a role of improving bonding with the body 110 by including glass, and the second electrode layers 131b and 132b may play a role of improving bending strength by including resin.

In this case, the glass included in the first electrode layers 131a and 132a may be a different type of glass from the glass 150 disposed in the lead-in portions 141, 142, 143 and 144, but is not particularly limited thereto, and the glass included in the first electrode layers 131a and 132a and the glass 150 disposed in the lead-in portions 141, 142, 143 and 144 may be the same glass.

The first conductive metal included in the first electrode layers 131a and 132a is not particularly limited as long as it is a material that may be electrically connected to the internal electrodes 121 and 122 for forming electrostatic capacitance, and may include, for example, at least one selected from the group consisting of nickel (Ni), copper (Cu), palladium (Pd), silver (Ag), gold (Au), platinum (Pt), tin (Sn), tungsten (W), titanium (Ti), and alloys thereof.

The first electrode layers 131a and 132a may be formed by applying a conductive paste prepared by adding glass frit to the first conductive metal particles and then firing the same.

The second conductive metal included in the second electrode layers 131b and 132b may perform a role of electrically connecting with the first electrode layers 131a and 132a.

The conductive metal included in the second electrode layers 131b and 132b is not particularly limited as long as it is a material that may be electrically connected to the electrode layers 131a and 132a, and may include at least one selected from the group consisting of nickel (Ni), copper (Cu), palladium (Pd), silver (Ag), gold (Au), platinum (Pt), tin (Sn), tungsten (W), titanium (Ti), and alloys thereof.

The second conductive metal included in the second electrode layers 131b and 132b may include at least one of spherical particles and flake-shaped particles. For example, the second conductive metal may be composed solely of flake-shaped particles, or solely of spherical particles, or may be a mixed form of flake-shaped particles and spherical particles. In this case, the spherical particles may also include a shape that is not a perfect spherical shape, and for example, may include a shape having a length ratio of the major axis to the minor axis (major axis/minor axis) of 1.45 or less. The flake-shaped particles refer to particles having a flat and elongated shape, and although not particularly limited, for example, the length ratio of the major axis to the minor axis (major axis/minor axis) may be 1.95 or more. The lengths of the major and minor axes of the above-mentioned spherical particles and flake-shaped particles may be measured from the image obtained by scanning the first and second cross-section cut from the central portion of the multilayer electronic component in the third direction using a scanning electron microscope (SEM).

The resin included in the second electrode layers 131b and 132b may secure bonding properties and perform shock absorption functions. The resin included in the second electrode layers 131b and 132b is not particularly limited as long as it has bonding properties and shock absorption properties and may be mixed with the second conductive metal particles to make a paste, and may include, for example, an epoxy-based resin.

In addition, the second electrode layers 131b and 132b may include a plurality of second conductive metal particles, an intermetallic compound, and a resin. By including the intermetallic compound, the electrical connectivity with the first electrode layers 131a and 132a may be further improved. Intermetallic compounds serve to improve electrical connectivity by connecting multiple metal particles, and may play a role in surrounding multiple metal particles and connecting the particles to each other.

In this case, the intermetallic compound may include a metal having a melting point lower than the curing temperature of the resin. For example, since the intermetallic compound includes a metal having a melting point lower than the curing temperature of the resin, the metal having a melting point lower than the curing temperature of the resin melts during the drying and curing process, forms an intermetallic compound with some of the metal particles, and surrounds the metal particles. At this time, the intermetallic compound may include, in detail, a low melting point metal of 300°C or less.

For example, Sn having a melting point of 213 to 220°C may be included. During the drying and curing process, Sn is melted, and the melted Sn wets high-melting-point metal particles such as Ag, Ni or Cu by capillary action, and reacts with some of the Ag, Ni or Cu metal particles to form intermetallic compounds such as Ag₃Sn, Ni₃Sn₄, Cu₆Sn₅, Cu₃Sn, and the like. Ag, Ni or Cu that does not participate in the reaction remains in the form of metal particles.

Therefore, the plurality of second conductive metal particles may include at least one of Ag, Ni or Cu, and the intermetallic compound may include at least one of Ag₃Sn, Ni₃Sn₄, Cu₆Sn₅ or Cu₃Sn.

The plating layers 131c and 132c may play a role in improving the mounting characteristics.

The type of the plating layers 131c and 132c is not particularly limited, and may be a single layer of the plating layers 131c and 132c including at least one of nickel (Ni), tin (Sn), silver (Ag), palladium (Pd), or alloys thereof, or may be formed of multiple layers.

For a more detailed example of the plating layers 131c and 132c, the plating layers 131c and 132c may be a Ni plating layer or a Sn plating layer, and may be in a form in which a Ni plating layer and a Sn plating layer are sequentially formed on an electrode layer, or may be in a form in which a Sn plating layer, a Ni plating layer, and a Sn plating layer are sequentially formed. In addition, the plating layers 131c and 132c may include multiple Ni plating layers and/or multiple Sn plating layers.

The size of the multilayer electronic component 100 does not need to be particularly limited.

However, to obtain miniaturization and high capacitance at the same time, the thickness of the dielectric layer and the internal electrode should be thinned to increase the number of layers, and thus, the effect according to the present disclosure may be more prominent in a multilayer electronic component 100 of a size of 3216 (length × width: 3.2 mm × 1.6 mm), a size of 2012 (length × width: 2.0 mm × 1.2 mm), a size of 1005 (length × width: 1.0 mm × 0.5 mm), or a size of 0603 (length × width: 0.6 mm × 0.3 mm) or less.

Hereinafter, a multilayer electronic component 100 according to an embodiment will be described in more detail.

In a multilayer electronic component 100 according to an embodiment, when an area that is introduced from the surface of a body 110 inwardly and includes glass 150 is referred to as lead-in portions 141, 142, 143 and 144, the lead-in portions 141, 142, 143 and 144 may be disposed between a capacitance formation portion Ac and cover portions 112 and 113.

In an area between the cover portions 112 and 113 of the capacitance formation portion Ac, in more detail, the interface between the cover portions 112 and 113 of the capacitance formation portion Ac, external moisture may easily penetrate. However, since the lead-in portions 141, 142, 143 and 144 are disposed between the cover portions 112 and 113 and the capacitance formation portion Ac and the lead-in portions 141, 142, 143 and 144 include glass 150, the external moisture penetration path is blocked, and the moisture resistance reliability of the multilayer electronic component 100 may be improved.

The lead-in portions 141, 142, 143 and 144 may refer to areas inlet from the surface of the body 110 toward the inside of the body 110 and may refer to a portion of the shape of the body 110.

Referring to FIG. 3, the body 110 includes an area introduced inwardly from the surface of the body 110 at the interface of the capacitance formation portion Ac and the cover portions 112 and 113, and the area may be referred to as the lead-in portions 141, 142, 143 and 144.

In more detail, the lead-in portions 141, 142, 143 and 144 may include first and second lead-in portions 141 and 142 disposed between the capacitance formation portion Ac and the first cover portion 112, and third and fourth lead-in portions 143 and 144 disposed between the capacitance formation portion Ac and the second cover portion 113. The first and third lead-in portions 141 and 143 may be disposed in positions adjacent to the third surface 3, and the second and fourth lead-in portions 142 and 144 may be disposed in positions adjacent to the fourth surface 4.

In FIG. 3, the lead-in portions 141, 142, 143 and 144 are illustrated as being formed in all four regions, which are interfaces between the capacitance formation portion Ac and the cover portions 112 and 113, but they are not particularly limited thereto, and even if they are formed in at least one region among the four regions, the moisture resistance reliability of the multilayer electronic component 100 may be improved. For example, in FIG. 5, which schematically illustrates a multilayer electronic component 200 according to another embodiment, it may be confirmed that the lead-in portions 241 and 242 are formed in two areas between the capacitance formation portion Ac and the first cover portion 212.

The lead-in portions 141, 142, 143 and 144 may be disposed only between the capacitance formation portion Ac and the cover portions 112 and 113.

For example, the lead-in portions 141, 142, 143 and 144 may not be formed on the surface of the body 110 between the extension surfaces of the end-surfaces of the capacitance formation portions Ac, and for example, the lead-in portions may not be formed between the internal electrodes 121 and 122 disposed on the outermost layers in the first direction in both directions among the internal electrodes 121 and 122. This may be to prevent the formation of unnecessary lead-in portions for improving the reliability of the moisture resistance, thereby preventing the generation of cracks that may occur due to external impact and thus protecting the capacitance formation portion Ac.

At least a portion of the glass 150 included in the lead-in portions 141, 142, 143 and 144 may be disposed to be in contact with at least one of the cover portions 112 and 113 and the capacitance formation portion Ac.

In the lead-in portions 141, 142, 143 and 144 introduced into the interior of the body 110, the glass 150 may be disposed to be in contact with at least a portion of the cover portions 112 and 113 corresponding to a portion of the surface of the body 110, and at least a portion of the capacitance formation portion Ac.

At this time, the thickness of the glass 150 disposed to be in contact with at least one of the cover portions 112 and 113 and the capacitance formation portion Ac may be 0.1 um or more.

When the thickness of the glass 150 is 0.1 um or more, it may effectively suppress external moisture penetration and improve the moisture resistance reliability of the multilayer electronic component 100, and the upper limit of the thickness is not particularly limited, and as described below, the glass may fill the lead-in portion.

In the multilayer electronic component 200 according to an embodiment, the lead-in portions 241 and 242 may be filled with glass 250.

By filling the lead-in portions 241 and 242 with glass 250, external moisture infiltration may be more effectively suppressed, thereby further improving the moisture resistance reliability of the multilayer electronic component 200. As described above, the drawing illustrates that the first and second lead-in portions 241 and 242 are formed only between the capacitance formation portion Ac and the first cover portion 212, and the glass 250 fills the first and second lead-in portions 241 and 242, but the present disclosure is not particularly limited thereto, and the lead-in portions may also be formed between the capacitance formation portion Ac and the second cover portion 213 and filled with glass.

Meanwhile, the glass 150 may be further disposed in a layer shape on the surface of the body 110.

In this case, the layered glass 150 is disposed along the surface of the body 110 and may be disposed between extension lines EL1 and EL2 of both end-surfaces in the stacking direction.

In this case, the meaning that the layered glass 150 is disposed along the surface of the body 110 may mean that, on a component of the body 110, such as the cover portions 112 and 113 and the dielectric layer 111, including the lead-in portions 141, 142, 143 and 144, the glass 150 having a constant thickness is disposed on the body 110. At this time, when the layered glass 150 has a constant thickness, the thickness of the layered glass 150 may be 0.1 um or more, and the thickness in this case may refer to an average thickness.

In more detail, the layered glass 150 may be disposed between the extension lines EL1 and EL2 of the first and second surfaces, and may not be disposed on the first and second surfaces 1 and 2 based on the first direction. In detail, the layered glass 150 may not be disposed below the extension line EL1 of the first surface, but may be disposed above the extension line EL1 of the first surface, and may not be disposed above the extension line EL2 of the second surface, but may be disposed below the extension line EL2 of the second surface.

At this time, the layered glass 150 may be disposed within an area of 50% from the extension lines EL1 and EL2 of both end-surfaces of the body 110 in the stacking direction toward each other.

Referring to FIG. 4, to describe in more detail as an example, it can be seen that the layered glass 150 formed adjacent to the second surface 2 is formed to extend from the extension line EL2 of the second surface, along the edge of the first cover portion 112 and the surface of the body 110 in the region of the second lead-in portion 142 formed adjacent to the fourth surface 4 between the capacitance formation portion Ac and the first cover portion 112, and is disposed up to a region GET2 where the second internal electrode 122 disposed on the uppermost layer in the first direction comes into contact. At this time, when the first direction size of the layered glass 150 disposed from the extension line EL2 of the second surface to the region GET2 where the second internal electrode 122 disposed on the uppermost layer (top layer) in the first direction comes into contact is t2, t2 may mean that it is 50% or less of the first direction size of the extension lines EL1 and EL2 of the first and second surfaces. In this case, the first direction size of the extension lines EL1 and EL2 of the first and second surfaces may refer to the first direction size between the first and second surfaces 1 and 2, and may also refer to the first direction size of the body 110.

Similarly, it can be seen that the layered glass 150 formed adjacent to the first surface 1 is formed to extend from the extension line EL1 of the first surface, along the edge of the second cover portion 113 and the surface of the body 110 in the region of the fourth lead-in portion 144 formed adjacent to the fourth surface 4 between the capacitance formation portion Ac and the second cover portion 113, and is disposed to the upper portion GET4 of the second internal electrode 122 disposed on the lowermost layer (lowest layer) in the first direction. At this time, when the first direction size of the layered glass 150 disposed from the extension line EL1 of the first surface to the upper portion GET4 of the second internal electrode 122 disposed on the lowermost layer (lowest layer) in the first direction is t4, t4 may mean that it is 50% or less of the first direction size of the extension lines EL1 and EL2 of the first and second surfaces.

In this description, only the glass 150 disposed in the adjacent area of the second and fourth lead-in portions 142 and 144 is described, but it will be obvious to those skilled in the art that the same description may be applied to the glass 150 disposed in the adjacent area of the first and third lead-in portions 141 and 143.

In this case, the case in which t2 and t4 are 50% of the first direction size of the extension lines EL1 and EL2 of the first and second surfaces, respectively, may mean that the layered glass 150 is formed as one layered glass 150 between the first and second surfaces 1 and 2.

Meanwhile, in the present disclosure, the layered glass 150 may exhibit a single layer shape, but is not particularly limited thereto, and is not limited to a structure without a disconnected region in the microstructure, and if it is disposed along the surface of the body 110 from the extension lines EL1 and EL2 of the first and second surfaces to the region where the layered glass 150 is formed, exceeding 50% of the surface of the body 110, it may mean that the layered glass 150 is sufficiently formed.

Meanwhile, the layered glass 150 may not be disposed on the areas of the third and fourth surfaces 3 and 4 where the internal electrodes 121 and 122 are exposed, and in more detail, the layered glass 150 may be disposed on the surface of a dielectric material such as cover portions 112 and 113 or a dielectric layer 111.

This may be due to the fact that the glass material has excellent wettability with the dielectric material due to characteristics thereof, and thus has better bonding properties with the surface of the dielectric material than with the surface of the internal electrodes 121 and 122, which is a metal material, but is not particularly limited thereto, and the glass may be disposed on some surfaces of the internal electrodes 121 and 122, but it may be preferable not to dispose the glass to cover the entire surface of the internal electrodes 121 and 122 for connectivity with the external electrodes 131 and 132.

The glass 150 included in the lead-in portions 141, 142, 143 and 144 or the layered glass 150 disposed on the surface of the body 110 may be the same glass.

Meanwhile, in the present disclosure, before applying the external electrodes 131 and 132, the glass 150 may be formed by applying a separate glass paste to the lead-in portions 141, 142, 143 and 144 between the capacitance formation portion Ac and the cover portions 112 and 113, on the surface of the body 110, and applying the external electrode paste thereon, to form the external electrodes 131 and 132 on the glass 150, but is not particularly limited thereto, and the glass 150 may also be formed as glass included in the first electrode layers 131a and 132a is absorbed by the surface of the body 110.

Meanwhile, in a case in which the first electrode layers 131a and 132a are formed by applying a separate glass paste to form the glass 150, or in a case in which the glass 150 is formed without applying a separate glass paste, the glass 150 may be disposed on the surface of the body 110 and the first electrode layers 131a and 132a may be disposed on the glass 150.

Meanwhile, in the multilayer electronic component 100 according to an embodiment, one ends of the internal electrodes 121 and 122 are connected to one longitudinal surfaces 3 and 4 of the body 110, and the other ends IEL1 and IEL2 of the internal electrodes 121 and 122 are disposed spaced apart from the other longitudinal surfaces 4 and 3 of the body 110, and when the length from the other ends IEL1 and IEL2 of the internal electrodes 121 and 122 to the other longitudinal surfaces 4 and 3 of the body 110 is referred to as a longitudinal margin, and when the average length of the longitudinal margin is referred to as LM and a maximum length of the lead-in portions 141, 142, 143 and 144 is referred to as GL, 10% ≤ GL/LM ≤ 100% may be satisfied.

By satisfying 10% ≤ GL/LM ≤ 100%, external moisture penetration is difficult, and thus, the moisture resistance reliability of the multilayer electronic component 100 may be improved.

In more detail, one end of the first internal electrode 121 is connected to the third surface 3, and the other end IEL1 of the first internal electrode 121 is disposed to be spaced apart from the fourth surface 4, and when the length from the other end IEL1 of the first internal electrode 121 to the fourth surface 4 is referred to as a first margin in the longitudinal direction, an average length of the first margin in the longitudinal direction may be referred to as LM2, and when a maximum length of the second lead-in portion 142 is referred to as GL2 and a maximum length of the fourth lead-in portion 144 is referred to as GL4, 10% ≤ GL2/LM2 ≤ 100% may be satisfied, and 10% ≤ GL4/LM2 ≤ 100% may be satisfied. Similarly, one end of the second internal electrode 122 is connected to the fourth surface 4, and the other end IEL2 of the second internal electrode 122 is disposed to be spaced apart from the third surface 3, and when the length from the other end IEL2 of the second internal electrode 122 to the third surface 3 is referred to as a second margin in the longitudinal direction, the average length of the second margin in the longitudinal direction may be referred to as LM1, and when the maximum length of the first lead-in portion 141 is referred to as GL1 and the maximum length of the third lead-in portion 143 is referred to as GL3, 10% ≤ GL1/LM1 ≤ 100% may be satisfied, and 10% ≤ GL3/LM1 ≤ 100% may be satisfied.

In this case, the average length of the first margin in the longitudinal direction may refer to a value obtained by measuring and averaging the length from the end IEL1 of the plurality of first internal electrodes 121 to the adjacent fourth surface 4, and the average length of the second margin in the longitudinal direction may also be obtained in the same manner.

Meanwhile, in the multilayer electronic component 100 according to an embodiment, when the average thickness of the body 110 is T and the maximum thickness of the lead-in portions 141, 142, 143 and 144 is GT, 10% ≤ GT/T ≤ 30% may be satisfied.

In this case, the maximum thickness of the lead-in portions 141, 142, 143 and 144 may refer to a maximum thickness of the shapes of the lead-in portions 141, 142, 143 and 144, and the thickness at the point where the lead-in portion begins in the inward direction of the body 110, for example, at the entrances of the lead-in portions 141, 142, 143 and 144, may correspond to the maximum thickness of the lead-in portions 141, 142, 143 and 144, but is not particularly limited thereto.

In more detail, when the maximum thickness of the first lead-in portion 141 is GT1, 10% ≤ GT1/T ≤ 30% may be satisfied, and when the maximum thickness of the second lead-in portion 142 is GT2, 10% ≤ GT2/T ≤ 30% may be satisfied, and when the maximum thickness of the third lead-in portion 143 is GT3, 10% ≤ GT3/T ≤ 30% may be satisfied, and when the maximum thickness of the fourth lead-in portion 144 is GT4, 10% ≤ GT4/T ≤ 30% may be satisfied.

By satisfying 10% ≤ GT/T ≤ 30%, external moisture penetration may be effectively prevented, thereby improving the moisture resistance reliability of the multilayer electronic component 100.

If GT/T < 10%, there is a concern that the target moisture resistance reliability may not be obtained because the glass 150 may not be sufficiently disposed in the lead-in portions 141, 142, 143 and 144, and if 30% < GT/T, there is a concern that the target moisture resistance reliability may not be obtained because the size of the lead-in portions 141, 142, 143 and 144 is too large and sufficient glass 150 may not be disposed, and thus, there is a concern that cracks may easily be generated inside the body 110 due to external impact, which may deteriorate mechanical properties.

Although embodiments of the present disclosure have been described in detail above, the present disclosure is not limited by the above-described embodiments and the accompanying drawings, but is intended to be limited by the appended claims. Therefore, various forms of substitution, modification, and change will be possible by those skilled in the art within the scope of the technical spirit of the present disclosure described in the claims, which also falls within the scope of the present disclosure.

The expression 'an embodiment' used in this disclosure does not mean the same embodiment, and is provided to emphasize and describe different unique characteristics. However, an embodiment presented above is not excluded from being implemented in combination with features of another embodiment. For example, even if a matter described in one detailed embodiment is not described in another embodiment, it may be understood as a description related to another embodiment unless there is a description contradicting or contradicting the matter in another embodiment.

Terms used in this disclosure are only used to describe an embodiment, and are not intended to limit the present disclosure. In this case, singular expressions include plural expressions unless the context clearly indicates otherwise.

As set forth above, according to an embodiment, interfacial bonding strength between a capacitance formation portion and a cover portion is improved.

Moisture resistance reliability of a multilayer electronic component is improved.

While example embodiments have been illustrated and described above, it will be apparent to those skilled in the art that modifications and variations could be made without departing from the scope of the present disclosure as defined by the appended claims.

## Claims

1. A multilayer electronic component (100) comprising:
a body (110) including a capacitance formation portion (Ac) including a dielectric layer (111) and an internal electrode (121, 122) alternately stacked with the dielectric layer (111), and a cover portion (112, 113) disposed on both end surfaces of the capacitance formation portion (Ac) in a stacking direction of the dielectric layer (111) and the internal electrode (121, 122); and
an external electrode (131, 132) disposed on the body (110),
wherein, when an area introduced inwardly from a surface of the body (110) and including glass (150) is defined as a lead-in portion (141, 142, 143, 144), the lead-in portion (141, 142, 143, 144) is disposed between the capacitance formation portion (Ac) and the cover portion (112, 113).

2. The multilayer electronic component (100) of claim 1, wherein the lead-in portion (141, 142, 143, 144) is disposed only between the capacitance formation portion (Ac) and the cover portion (112, 113).

3. The multilayer electronic component (100) of claim 1, wherein at least a portion of the glass (150) included in the lead-in portion (141, 142, 143, 144) is in contact with at least one of the cover portion (112, 113) and the capacitance formation portion (Ac).

4. The multilayer electronic component (100) of claim 3, wherein an average thickness of the glass (150) in contact with at least one of the cover portion (112, 113) and the capacitance formation portion (Ac) is 0.1 pm or more.

5. The multilayer electronic component (200) of claim 1, wherein the lead-in portion (241, 242, 243, 244) is filled with the glass (250).

6. The multilayer electronic component (100) of claim 1, wherein the glass (150) is further disposed in a layered shape on the surface of the body (110), and
the glass (150) in the layered shape is disposed between extension lines (EL1, EL2) of the both end surfaces of the body (110) in the stacking direction.

7. The multilayer electronic component (100) of claim 6, wherein the glass (150) of the layered shape is disposed within an area of 50% from the extension lines (EL1, EL2) of the both end surfaces of the body (110) in the stacking direction toward each other.

8. The multilayer electronic component (100) of claim 6, wherein the glass (150) of the layered shape is disposed on a surface of the dielectric layer (111).

9. The multilayer electronic component of claim 1, wherein one end (EL3, EL4) of the internal electrode (121, 122) is connected to one surface of the body (110) in a longitudinal direction, and the other end (IEL1, IEL2) of the internal electrode (121) is disposed spaced apart from the other surface of the body (110) in the longitudinal direction, and
when a length from the other end (IEL1, IEL2) of the internal electrode (121, 122) to the other surface of the body (110) in the longitudinal is defined as a longitudinal margin, and
when an average length of the longitudinal margin is LM and a maximum length of the lead-in portion (141, 142, 143, 144) is GL, 10% ≤ GL/LM ≤ 100% is satisfied.

10. The multilayer electronic component (100) of claim 1, wherein when an average thickness of the body (110) is T and a maximum thickness of the lead-in portion (141, 142, 143, 144) is GT, 10% ≤ GT/T ≤ 30% is satisfied.

11. The multilayer electronic component (100) of claim 1, wherein a portion of the external electrode (131, 132) is disposed within the lead-in portion (141, 142, 143, 144) .

12. The multilayer electronic component (100) of claim 1, wherein the multilayer electronic component (100) has a length of 0.6 mm or less and a width of 0.3 mm or less.

13. The multilayer electronic component (100) of claim 1, wherein the glass (150) in lead-in portion (141, 142, 143, 144) extends from an end of the internal electrode (121, 122) along the internal electrode (121, 122).

14. The multilayer electronic component (100) of claim 1, wherein the lead-in portion (141, 142, 143, 144) is disposed outside a region between outermost internal electrodes (121, 122).
